# EUROPEAN PATENT APPLICATION

(11) **EP 3 647 493 A1**
(43) Date of publication of application: **06.05.2020**
(21) Application number: 18204157.4
(22) Date of filing: 02.11.2018
(51) Int. Cl.: E01C 13/08, E01C 19/00, E01C 19/15, E01C 23/01, E01H 1/00, E01H 1/08, A01B 45/00, A01D 34/00, G01C 11/00, G06F 17/50, A47L 25/00

(54) **DRONE GUIDED TURF MAINTENANCE**

(71) Applicant: Melos GmbH, 49324 Melle (DE)
(72) Inventor: The designation of the inventor has not yet been filed
(74) Representative: Richardt Patentanwälte PartG mbB

(57) **Abstract**

Turf maintenance system (100) comprising a turf maintenance robot (104) configured for performing maintenance on an artificial turf (600). The turf maintenance system further comprises drone (106) configured for flying above the artificial turf, wherein the drone comprises a sensor (500) configured for acquiring artificial turf data (120) descriptive of the artificial turf. The turf maintenance system further comprises a memory (114) for storing machine executable instructions. The turf maintenance system further comprises a processor (108) configured for controlling the turf maintenance system. Execution of the machine executable instructions causes the processor to: control (200) the drone to fly over the artificial turf and acquire the artificial turf data; and control (202) the turf maintenance robot to perform maintenance on the artificial turf using the artificial turf data. A method of artificial turf maintenance and a computer program are also disclosed.

## Description

### Field of the invention

The invention relates to artificial turf, in particular to the maintenance and care of artificial turf.

### Background and related art

Artificial turf or artificial grass is surface that is made up of fibers which is used to replace grass. The structure of the artificial turf is designed such that the artificial turf has an appearance which resembles grass. Typically artificial turf is used as a surface for sports such as soccer, American football, rugby, tennis, golf, for playing fields, or exercise fields. Furthermore artificial turf is frequently used for landscaping applications.

Artificial turf may be manufactured using techniques for manufacturing carpets. For example artificial turf fibers which have the appearance of grass blades may be tufted or attached to a backing. Often times artificial turf infill is placed between the artificial turf fibers. Artificial turf infill is a granular material that covers the bottom portion of the artificial turf fibers. The use of artificial turf infill may have a number of advantages. For example, artificial turf infill may help the artificial turf fibers stand up straight. Artificial turf infill may also absorb impact from walking or running and provide an experience similar to being on real turf. The artificial turf infill may also help to keep the artificial turf carpet flat and in place by weighting it down.

International patent application publication WO 2014/007627 A1 discloses a device for carrying out maintenance operations on an artificial lawn, in particular an artificial grass sports field, which device is movable across the artificial lawn. It relates to a method for carrying out such maintenance operations, on an artificial lawn, in particular an artificial grass sports field, using a maintenance device. The device further comprises control means for controlling the maintenance means and the drive means on the basis of a maintenance plan.

### Summary

The invention provides for a turf maintenance system, a computer program, and a method in the independent claims. Embodiments are given in the dependent claims.

The maintenance of artificial turf is important for providing an optimal playing surface for sports such as soccer, football, rugby, and field hockey. However, the maintenance of an artificial turf can be time consuming and reduce the time which is available for using the artificial turf. Embodiments may provide for a means of reducing the amount of time necessary to maintain an artificial turf by using a drone and a turf maintenance robot. The drone flies over the artificial turf and acquires artificial turf data. The artificial turf data is then used to control the turf maintenance robot to perform maintenance on the artificial turf.

In some embodiments the artificial turf data is used to identify maintenance zones in the artificial turf. The turf maintenance robot is then able to selectively perform maintenance on the maintenance zones. This may avoid performing maintenance on the entire artificial turf.

In one aspect the invention provides for a turf maintenance system that comprises a turf maintenance robot that is configured for performing maintenance on an artificial turf. The turf maintenance system further comprises a drone configured for flying above the artificial turf. The drone comprises a sensor configured for acquiring artificial turf data descriptive of the artificial turf. The turf maintenance system further comprises a memory for storing machine-executable instructions. The turf maintenance system further comprises a processor configured for controlling the turf maintenance system. Execution of the machine-executable instructions causes the processor to control the drone to fly over the artificial turf and acquire the artificial turf data. Execution of the machine-executable instructions further causes the processor to control the turf maintenance robot to perform maintenance on the artificial turf using the artificial turf data. This embodiment may be beneficial because it may provide for a more efficient means of maintaining the artificial turf. The drone is able to determine where the maintenance is needed. This for example may be useful in reducing the amount of time that an artificial turf is unavailable due to maintenance with the turf maintenance robot.

The artificial turf maintenance robot may perform maintenance in several different manners. For example artificial turf has a grain. The turf maintenance robot may perform cross brushing on the artificial turf to raise the pile of the artificial turf into a more natural position. There may also be debris or other materials which are on the surface of the artificial turf. The turf maintenance robot may be used for cleaning the surface of the artificial turf. For example the drone may fly over and locate the position of trash or other debris on the artificial turf. Artificial turf also often contains so called artificial turf infill which is granular material which is dispersed within the pile of the artificial turf carpet. The turf maintenance robot may in some instance be configured for re-distributing the artificial turf infill or possibly for even adding additional artificial turf infill.

The control of the artificial turf maintenance robot to perform the maintenance on the artificial turf using the artificial turf data may be performed in several different ways. In one example the drone overflies the artificial turf first and acquires the necessary data and provides this to the turf maintenance robot. In another example the drone may hover or fly as the turf maintenance robot is performing the maintenance. This may have several advantages. The turf maintenance robot may obtain its coordinates and guidance from the drone. The drone could then optically control the turf maintenance robot or know its location so that an external location system or GPS is not necessary. This for example may be beneficial in indoor arenas where a GPS signal is not available. The use of the drone for guiding the turf maintenance robot may therefore be beneficial because it also provides a guidance system for the turf maintenance robot.

In another embodiment the artificial turf data comprises image data. Execution of the machine-executable instructions further causes the processor to identify at least one maintenance zone within the artificial turf by inputting the image data into an image classification module. Execution of the machine-executable instructions further causes the processor to control the turf maintenance robot to perform the maintenance on the at least one maintenance zone. In this embodiment the image data is input into the image classification module and this is used to identify regions that need maintenance. This may accelerate the maintenance of the artificial turf by the turf maintenance robot. For example the image classification module may identify debris or trash that is on the surface of the artificial turf. Additionally it may indicate when the pile or grain of the artificial turf has been trampled down and requires cross brushing. In other examples it may also be able to optically identify when there is too little or displaced artificial turf infill and it may control the turf maintenance robot to redistribute the infill or provide more infill.

In another embodiment execution of the machine-executable instructions further causes the processor to limit maintenance to the at least one maintenance zone. In this embodiment the turf maintenance robot does not maintain areas that are not identified as maintenance zones. This may result in greatly accelerating the maintenance of the artificial turf by the turf maintenance robot.

In another embodiment the sensor comprises any one of the following: a camera, a stereo camera and combinations thereof. This may be beneficial because it may be easy to mount cameras on a drone and use this to detect the maintenance zones.

In another embodiment the image classification module is configured for identifying the at least one maintenance zone by detecting a color different in the turf images. For example, there may be a color difference between the artificial turf fibers and the artificial turf infill. This may be useful in identifying if there is too much or too little artificial turf infill at a particular location. The color of the artificial turf may also change if the pile has been trampled in one direction.

In another embodiment the image classification module is configured for identifying the at least one maintenance zone by detecting a spatially dependent reflectivity of the artificial turf. A laser or other light source may be bounced off the surface and its reflectivity measured. The reflectivity of the artificial turf may for example indicate a lack or surplus of artificial turf infill as well as an indication of the state of the grain. For example if the pile has been pushed over too much it may affect the reflectivity.

In another embodiment the image classification module is configured for identifying the at least one maintenance zone by detecting a pile direction pattern in the turf images. For example the individual blades or grains of the artificial turf may be detected directly by imaging this.

In another embodiment the image classification module is at least partially implanted as a neural network. This embodiment may be beneficial because the neural network may be useful in identifying or classifying various regions of the artificial turf as being in need of maintenance or not. For example the neural network could be easily programmed to identify trash or objects sitting on the artificial turf. The neural network could also be useful for identifying the absence or lack of artificial turf infill or the grain in varying light conditions. The neural network may provide for a more robust and better functioning image classification module.

In another embodiment the performing maintenance of the artificial turf comprises any one of the following: cleaning a surface of the artificial turf, cross-brushing the artificial turf, re-distributing the artificial turf infill, and combinations thereof.

In another embodiment the turf maintenance robot is configured for brushing the artificial turf surface. The turf maintenance robot is a self-driving robot. The performing of maintenance on the artificial turf comprises calculating a brushing path using the artificial turf data. Performing the maintenance further comprises controlling the artificial turf maintenance robot to follow the brushing path. For example the brushing path could be optimized for the particular maintenance zones that were identified by the drone.

In another embodiment the turf maintenance robot further comprises at least two drive wheels configured for propelling the self-propelled robot. The at least two drive wheels have a common rotational axis. A brush is mounted at least partially behind the rotational axis. The brush it mounted between the two drive wheels.

In another embodiment the turf maintenance robot comprises a vacuum system configured for vacuuming the artificial turf surface. The method further comprises vacuuming the artificial turf surface during the brushing of the artificial turf surface.

In another embodiment the vacuum system comprises an inlet nozzle that is configured for contacting the artificial turf surface in front of the brush. The turf maintenance robot further comprises turf infill plowing structures in front of the brush.

In another embodiment the turf maintenance robot comprises a positioning system. The positioning system could be based on different systems. For instance it may be done using a triangulation based on cell tower data. Another method may be the use of a GPS receiver, a Galileo receiver or a Glonass receiver. The position determining system may also rely on the reception of radio signals from beacons or markers placed in or around the artificial turf surface. In some examples any or all of these position determining systems are used in one or more combinations.

As an alternative to GPS, the positioning system could be an Ultra-wideband (UWB) positioning system. A UWB positioning system uses UWB radio signals and uses a time of flight difference calculation to determine position. UWB is currently defined as an RF signal occupying a portion of the radio frequency spectrum that is greater than 20% of the carrier frequency or has a bandwidth of greater than 500 MHz. UWB uses low energy and typically does not interfere with other radio communications.

UWB positioning technology functions similar to GPS technology, but the UWB technology is often more accurate. A time delay between UWB radio signals between the positioning system of the turf maintenance robot and several radio transmitters is measured to determine location of the turf maintenance robot. The time delay of the signals between the turf maintenance robot and one of the transmitters can be used to determine the distance between the turf maintenance robot and that particular transmitter. The accuracy of UWB positioning can be up to 10 cm. Using intelligent filter algorithms and fusion with other sensors the accuracy of the positioning can be increased further.

For example, gyroscope data can be combined with UWB positioning to improve the accuracy of the positioning system. Gyroscopes are used in the Aerospace and automotive industries to improve positioning. The turf maintenance robot may also have a distance traveled measuring device that accurately measures the distance that the turf maintenance robot travels. This may for example be performed by using a sensor that measures or encodes the rotation of the wheels.

The turf maintenance robot may, for example, follow a predetermined cleaning program with a programmed driving path. The Navigation of this path may be performed using the UWB positioning technology, the distance traveled by the robot, and gyroscope data. The steering and drive of the turf maintenance robot may be performed by a programmed computer or controller that communicates with the drive system of the wheels, the steering and receives data from the sensor measuring wheel rotation, the UWB positioning system, and the gyroscope. A CAN-bus, as is used in automotive applications, may for example be used for the reviewing of sensor data and for controlling the turf maintenance robot.

In another embodiment, the positioning system is configured for determining a trajectory of the turf maintenance robot.

The grain of an artificial turf as used herein encompasses the natural tendency of turf fibers to lie at a slightly slanted angle. The term grain is also alternatively known as the pile direction. In German the grain is known as *Florrichtung.* In another embodiment, the artificial turf data comprises turf grain data. Turf grain data as used herein is data which is descriptive of the pile direction of the artificial turf.

In another embodiment, the turf grain data is spatially dependent.

In another embodiment, the position system is further configured for providing a current location.

In another embodiment, the brushing of the artificial turf surface is at least partially determined by turf grain data and the current location. For example, the current location may be used to determining the turf grain data at the turf maintenance robot's current location or along a trajectory that the turf maintenance robot is following. This may be beneficial because knowing the location of the turf maintenance robot and also knowing the spatially dependent direction of the grain may help the robot brush the artificial turf surface more effectively. A knowledge of the turf grain data along a trajectory may also be used to adjust the trajectory of the turf maintenance robot to optimize or improve the brushing.

In another embodiment the turf maintenance robot further comprises a transceiver. The method further comprises receiving at least a portion of the turf grain data via the receiver. The method further comprises storing the turf grain data in the memory. This for example may be beneficial because different turf maintenance robots may be used in different locations. As a turf maintenance robot is moved to a different location it may retrieve the data for a particular artificial turf surface such as a particular sport or soccer field. This may enable more flexibility in maintaining artificial turf surfaces.

In another embodiment the method further comprises sending a database query via the transceiver. The turf grain data is received via the transceiver in response to the database query. This may be beneficial as it may provide for a means of managing data for a large number of different artificial turf surfaces. The use of a database query may also be used to format the particular type of data. For example the turf grain data may initially be stored in the form of a mapping at the location of a central database. In the course of the database query information about the type of robot and/or brushing surface may be included so that the appropriate turf grain data for that particular robot is returned in response to the database query.

In another embodiment, the turf maintenance robot comprises a receiver that is configured for at least partially determining the current location using multiple received radio signals. For example an artificial turf surface or playing field could have several antennas or transmitters which emit an electromagnetic field or a signal. The electromagnetic field or signal could for example be an analog or digital signal. The reception of these multiple radio signals could be used to determine the location of the turf maintenance robot on the artificial turf surface. For example one antenna could be placed at each corner of artificial turf surface or playing field. In some examples the receiver is part of the transceiver mentioned above. In other examples the receiver is a separate component.

In another embodiment the turf maintenance robot comprises at least one optical sensor configured for acquiring optical data descriptive of the artificial turf surface within a field of view of the at least one optical sensor. The method further comprises acquiring the optical data using the at least one optical sensor. The method further comprises using the controller to at least partially determine the turf grain data using the optical data. This embodiment may be beneficial because the turf grain data may be updated or modified using the optical sensor before the turf maintenance robot actually traverses a particular region of an artificial turf surface. This may lead to more effective and/or more efficient maintaining of the artificial turf. In another embodiment the at least one optical sensor comprises any one of the following: a camera, a stereo camera, and combinations thereof.

In another embodiment the controller is configured to use a machine learning algorithm to at least partially determine the turf grain data using the optical data. The machine learning algorithm may for instance contain a programmed neural network or other artificial intelligence algorithm such as a pattern recognition algorithm which is used to determine the turf grain data from the optical data.

In another embodiment the turf maintenance robot comprises a usage meter for recording usage data. The usage data comprises any one of the following: a time usage data, a distance travelled usage data, and combinations thereof. The method further comprises recording the usage data using the usage meter. The usage data may be beneficial in several different situations. It may be useful for generating billing but this is not the only use. For example the usage data may be effective in estimating when the turf maintenance robot needs maintenance or repairs. The usage data may reflect the actual amount of time which the turf maintenance robot is in use. This may be useful in either scheduling periodic maintenance to avoid failure of the turf maintenance robot or in the diagnosis of failures after they have already occurred.

In another embodiment the method further comprises generating an invoice using the usage data.

In another embodiment the method further comprises sending the usage data to a remote server or a cloud storage device. The method further comprises generating a billing invoice using the usage data by the remote server of the cloud storage device. This may provide for an efficient means of billing during the use of the turf maintenance robot.

The remote server could for example be, but is not limited to: a smart phone, a computer, a database system, or a cloud storage device.

In another embodiment the method further comprises generating repair instructions using at least partially the usage data. This embodiment may be beneficial because the actual use of the turf maintenance robot may provide communications of which parts are likely to fail. This may provide for more rapid or efficient repair of the turf maintenance robot.

In another embodiment the turf maintenance robot further comprises at least two drive wheels configured for propelling the self-propelled robot. The at least two drive wheels have a common rotational axis. A brush is mounted at least partially behind the rotational axis. The brush is mounted between the two drive wheels. Mounting the brush behind the rotational axis may be beneficial because if there are any objects or protrusions in the artificial turf surface the effect will be to lift the robot over its center of gravity and not to cause a tipping motion in the turf maintenance robot.

The use of the word behind, as used herein, can be understood to be defined by the direction of travel of the self-propelled robot. For example if the self-propelled robot is traveling in a particular direction the portion of the self-propelled robot that is opposed to the direction of travel would be the region behind the self-propelled robot.

In another embodiment, the brush is a stationary brush. A stationary brush as used herein is a brush that has a stationary or fixed position relative to the turf maintenance robot. The stationary brush may be attached to a mechanism to adjust the height of the brush relative to the drive wheels but the stationary brush is non-rotational.

The stationary brush may be alternatively defined such that the stationary brush performs brushing of the artificial turf carpet by being dragged across the artificial turf surface. The dragging is due to motion caused by the at least two drive wheels.

The advantage of using a stationary brush is that it eliminates the need to use a costly system to rotate a cylindrical brush. The brush is simpler and the brush does not need a separate drive system to rotate the brush.

In another embodiment the turf maintenance robot comprises a vacuum system configured for vacuuming the artificial turf surface. The method further comprises vacuuming the artificial turf surface during the brushing of the artificial turf surface.

In another embodiment the vacuum system comprises an inlet nozzle that is configured for contacting the artificial turf surface in front of the brush. Placing the inlet nozzle before the brush may aid in removing debris from the artificial turf before it can be mixed into the artificial turf infill by the brush.

In another embodiment the turf maintenance robot further comprises turf infill ploughing structures in front of the brush. The use of the turf infill ploughing structures may be beneficial as they may help place the artificial turf fibers in an upright position and also to make it easier for the brush to level the infill material. The turf infill ploughing structures may also be referred to as a rake.

As used herein front indicates the portion of the turf maintenance robot which is closest to the direction of travel.

In another embodiment the turf infill ploughing structures may be located between the inlet nozzle and the brush. This may be beneficial because any trash or debris may be removed by the vacuum system before the turf infill ploughing structures begin to move or displace the artificial turf infill. This may help reduce the chances that debris or garbage is mixed into the artificial turf infill.

In another embodiment the turf infill ploughing structures comprise a ploughing structure height adjustment mechanism. This may be beneficial because it may be useful in modifying how the turf maintenance robot performs on different artificial turf surfaces. For example the ploughing structure height adjustment mechanism could either be manually or automatically adjusted.

In another embodiment the turf maintenance robot comprises a brush height adjustment mechanism for adjusting the brush height. Again, this brush height adjustment mechanism could be either manually or automatically adjusted. The use of the brush height adjustment mechanism may be beneficial if the turf maintenance robot is used on different artificial turf surfaces. It could be used to adjust for different types or amounts of infill as well as different types of artificial turf fiber.

In another embodiment the brushing of the artificial turf surface comprises calculating a cross brushing path using at least partially the turf grain data and also controlling the turf maintenance robot to follow the cross brushing path. Cross brushing as used herein is defined as brushing in a direction that directly opposes the grain of the artificial turf surface.

In another embodiment the method further comprises controlling the turf maintenance robot to travel between multiple artificial turf surfaces. This may be beneficial because a single turf maintenance robot may be used to maintain more than one artificial turf.

In another embodiment the turf maintenance robot further comprises at least one RFID reader. The method further comprises at least partially determining the turf grain data using the at least one RFID reader. For example the location of the turf maintenance robot could be determined by data received by the at least one RFID reader. For example RFID tags could be embedded in the artificial turf carpet, for example in the backing. This could be accomplished in different ways. The RFID tags may for instance have unique numbers which are known to be related to particular locations. The RFID tags could also locally contain data which is descriptive of the location or even of the turf grain data.

In another embodiment the artificial turf comprises an artificial turf carpet with a backing. The backing comprises RFID carriers. The RFID carriers contain local turf data. The local turf data at least partially comprises the turf grain data. The controller is configured for at least partially receiving the turf grain data from the RFID data carriers by reading the local turf data from the RFID carriers with the at least one RFID reader.

The RFID data carriers for instance may also be used to mark a particular path or boundary of the artificial turf.

In another embodiment the artificial turf fibers comprise an optical path marked with fluorescent dye markers. The self-propelled robot comprises at least one optical sensor configured for acquiring optical data descriptive of the artificial turf surface within a field of view of the at least one optical sensor. The controller is configured for detecting the optical path marked with fluorescent dye markers within the optical data. The method further comprises at least partially determining the turf grain data using the optical path. The optical path may take different forms in different examples. In one example the optical path may be used to denote boundaries of the artificial turf or boundaries where the artificial turf has different grains. The optical path may also be an indication of a particular path that the turf maintenance robot should follow. The fluorescent dye markers could for instance be combined into particular artificial turf fibers.

In another embodiment the artificial turf fibers comprise a magnetic path marked with magnetic markers. The self-propelled robot comprises a magnetic sensor configured for determining the magnetic path marked with the magnetic markers. The method further comprises at least partially determining the turf grain data using the magnetic path. The magnetic path may for instance be a particular path for the robot to follow or may be used to mark the boundaries between different regions with different grains.

In another embodiment the method further comprises automatically moving the turf maintenance robot between the different artificial turf surfaces using an autonomous vehicle. For example the autonomous vehicle may be a so-called self-driving car and may be used to take the turf maintenance robot between remote locations. This may have the benefit of reducing the cost by being able to use the turf maintenance robot automatically at different locations.

In another embodiment the autonomous vehicle comprises a robot cradle for holding the turf maintenance robot during travel. The robot cradle is further configured for charging the turf maintenance robot. This may be beneficial because as the turf maintenance robot is being moved it is also being charged. The time which is used for charging can now be used to transport to a new location so that the turf maintenance robot is used more effectively.

In embodiment, the artificial turf is an tufted artificial turf comprising an artificial turf carpet comprising a carrier, indicator yarn fibers and face yarn fibers, and an artificial turf infill distributed between the indicator yarn fibers and the face yarn fibers. The face yarn fibers and the indicator yarn fibers are tufted into the carrier such, that the face yarn fibers protrude vertically from the carrier with a face yarn fiber height and the indicator yarn fibers protrude vertically from the carrier with an indicator yarn height, wherein the face yarn fiber height is larger than the indicator yarn fiber height. Further, the artificial turf infill has an installation height above the carrier, wherein the installation height is greater or equal than the indicator yarn fiber height. In addition, the indicator yarn fibers have an first optically visible contrast relative to the face yarn fibers and wherein the indicator yarn fibers have a second optically visible contrast relative to the artificial turf infill.

The yarns of the indicator yarn fibers and the face yarn fibers may be monofilament yarns that are tufted and anchored into the carrier as loops, which may then be cut, which then results in two fibers, also so-called ribbons, for each stitched or tufted loop of yarn. An "indicator yarn" as used herein is yarn used with a different optically visible contrast compared to either the face yarn or the artificial turf infill. A "face yarn" (or "pile yarn") as used herein is the yarn that protrudes vertically from the carrier of the artificial turf farther than any other type of yarn contained in the artificial turf, if any, thereby determining the pile height of the artificial turf.

It is feasible that multiple, usually between 2 and 4 yarns are tufted into the same tuft by the same needle, therefore resulting in 4, 6 or 8 fibers per tuft, which extend upwardly from the carrier and which may represent blades of grass. It is possible that either only indicator yarn fibers or only face yarn fibers or a combination of indicator yarn fibers and face yarn fibers are arranged per tuft. It is further feasible that the indicator yarn fibers and the face yarn fibers are straight (non-texturized) fibers or texturized fibers.

The term "tufting" as used herein is a sub-process in the manufacturing of artificial turf that comprises pressing (e.g. by using pneumatic force) a U-shaped piece of yarn through a carrier, e.g. a carrier mesh or other form of carrier structure. The carrier of the artificial turf carpet may comprise a single layer of material or multiple layer of material, and the individual layers may be either woven or nonwoven material.

The height of the artificial turf fibers (face yarn fibers and indicator yarn fibers) may be altered solely by cutting the respective yarn shorter or leaving it longer. The height of the artificial turf fibers may be also altered by stretching the fibers while being cut and/or subjecting the fibers to a contraction inducing condition that modulates the height of face yarn fibers and indicator yarn fibers differently such that an indicator yarn layer with a homogeneous fiber length and a face yarn layer with a different homogeneous fiber length is generated. It is envisaged that the height of the face yarn layer, respectively the height of the face yarn fibers, is larger than the height of the indicator yarn layer, respectively the height of the indicator yarn fibers.

The indicator yarn fibers and face yarn fibers protrude in the same direction, preferably each with a predefined shared fiber height. It is envisioned that face yarn fibers protrude from the carrier with a face yarn fiber height and the indicator yarn fibers protrude from the carrier with an indicator yarn height, wherein the face yarn fiber height is larger than the indicator yarn fiber height. It may be further advantageous that all face yarn fibers have basically the same length (measured from the point where the fiber is integrated in the carrier and the end of the fiber protruding from the carrier). Preferably, the height deviations of the face yarn fibers is below 6% of the fiber length, preferably below 2.5% of the fiber length. It may be further advantageous that all indicator yarn fibers have basically the same length (measured from the point where the fiber is integrated in the carrier and the end of the fiber protruding from the carrier). Preferably, the height deviations of the indicator yarn fibers is below 6% of the fiber length, preferably below 2.5% of the fiber length.

An artificial turf infill is distributed or interspersed between the indicator yarn fibers and the face yarn fibers on the carrier for filling up the space between the fibers, for ballast and cushion. The infill may comprise sand, rubber granulate, elastic granules or a mixture thereof. It is within the scope of the invention that the infill installation height above the carrier is greater than the indicator yarn fiber height. Thus, if the infill is installed correctly, no indicator yarn fibers are optically visible, since it belongs to the invention that the indicator yarn fibers have a first optically visible contrast relative to the face yarn fibers and a second optically visible contrast relative to the artificial turf infill.

The first optically visible contrast and the second optically visible contrast may be the same contrast. Further, the optically visible contrast might be any contrast distinguishable by the human eye or by optical means. For example, the optically visibly contrast may be a color contrast, which may be distinguishable by the human eye. Hence, if the face yarn fibers and the infill have for example a green color and the indicator yarn fibers have a blue color, the indicator yarn fibers are not optically visibly, if the infill is installed with the correct installation height. Optically visibly are in this case only the face yarn fibers, since their heights are larger than the height of the indicator yarn fibers, and the infill material, since the installation height of the infill is greater than the indicator yarn fiber height. However, in case that the infill is not correctly installed or that the layer of infill material has been disturbed by a user or rough weather, the - in the example blue - indicator yarn fibers are optically visible in places where the infill has been moved. It is therefore easy for the user to determine which areas should be prepared or maintained.

In one embodiment of the invention, the face yarn fibers have a optically visible contrast relative to the artificial turf infill.

This might be further advantageous for distinguishing the optically visibly contrast between the indicator yarn fibers and the artificial turf infill, in particular if the contrast difference between the infill and the indicator yarn fibers is bigger than the contrast difference between the face yarn fibers and the infill.

In another embodiment of the invention, the indicator yarn fibers are texturized or straight fibers and the face yarn fibers are straight fibers.

To delay and reduce texture reversion of a textured fiber, it is further envisaged for another embodiment of the invention that the texturized fibers are produced from stretched and textured monofilament yarn comprising a polymer mixture, wherein the polymer mixture is at least a three-phase system, wherein the polymer mixture comprises a first polymer, a second polymer, and a compatibilizer, wherein the first polymer and the second polymer are immiscible, wherein the first polymer forms polymer beads surrounded by the compatibilizer within the second polymer.

Hereby it may be advantageous that the first polymer comprises polyamide, wherein the second polymer comprises polyethylene.

Further, it may be useful that the compatibilizer comprises any one of the following: a maleic acid grafted on polyethylene or polyamide; a maleic anhydride grafted on free radical initiated graft copolymer of polyethylene, SEBS, EVA, EPD, or polyproplene with an unsaturated acid or its anhydride such as maleic acid, glycidyl methacrylate, ricinoloxazoline maleinate; a graft copolymer of SEBS with glycidyl methacrylate, a graft copolymer of EVA with mercaptoacetic acid and maleic anhydride; a graft copolymer of EPDM with maleic anhydride; a graft copolymer of polypropylene with maleic anhydride; a polyolefin-graft-polyamidepolyethylene or polyamide; and a polyacrylic acid type compatibalizer.

Since the face yarn fibers are straight (non-texturized) fibers they may resemble grass blades better than texturized fibers. The compared to the face yarn fibers shorter indicator fibers add resilience and lock in infill granules which are distributed more densely near the base of the fibers. To add further reliance, it may be advantageous that the indicator yarn fibers are texturized. A "texturized" fiber as used herein is a fiber that has a molecular memory of a textured state, wherein a textured state can be, for example, a curled, crumpled and/or wrinkled state. The primarily formed texturized fiber is tufted into a turf surface and forms the uncoated carpet (greige good). In a further step the final carpet is formed from the greige good by coating of the greige good with a so-called secondary backing e.g. a two-component polyurethane coating, a water based styrene butadiene latex coating, a hotmelt coating or the like. In all cases the carpet fibers are exposed to heat during the coating process and show a shrinking and a post texturization (a further increase of the curling/ wrinkled state). It is envisaged that the texturized fibers are texturized such, that the fibers extending from the carrier have a texturization degree, also referred to as bulkiness, between 7% and 30 %, preferable between 8% and 22% and most preferred between 13% and 17%. The relative length difference of the texturized yarn prior and after the heat exposure is defined as texturization degree or bulkiness. The desired bulkiness can be obtained with methods known in the art. For example, one method to obtain the desired bulkiness is to expose the texturized yarn for five minutes to 90°C (which simulates the post texturization) and to measure the shrinkage of the texturized yarn under weight. In a further beneficial aspect, the rigidity of the face yarn fibers is increased by the texturized shorter indicator yarn fibers even if no infill is present or if the height of the infill layer is lower or much lower than the height of the face yarn fibers. This may allow providing an artificial turf that is particularly robust against wear and tear.

Hence, it might be in particular advantageous that the indicator yarn fibers are texturized .

In another embodiment of the invention, the height difference between the face yarn fiber height and the installation height is equal or greater than 1 mm.

This height difference is in particular important for the bouncing and braking or deceleration behavior of balls on artificial turf and is therefore dependent on the type of sport. For example, it is advantageous that the free pile height, meaning the height difference between the face yarn fiber height and the installation height of the infill (infill fill height) is for an artificial football turf between 18 mm and 22 mm. For a sand dressed artificial hockey turf, which is a hockey turf which is e.g. filled with sand, it is advantageous that the height difference (free pile height) is between 5 mm and 14 mm. For paddle tennis or tennis, the height difference may preferably be between 1 mm and 5 mm.

In another embodiment of the invention, the carrier comprises tufts, comprising at least two indicator yarn fibers, which are integrated into the carrier in the form of first rows and wherein the carrier further comprises tufts, comprising at least two face yarn fibers, which are integrated into the carrier in the form of second rows, wherein the first rows and second rows alternate and wherein the first rows and second rows are parallel to each other.

Alternatively, in another embodiment of the invention, the carrier comprises tufts, comprising in the same tuft at least two indicator yarn fibers and at least two face yarn fibers. These tuft can be integrated into the carrier in the form of third rows, whereby the third rows are parallel to each other.

Alternatively, in another embodiment of the invention, the carrier comprises first tufts, comprising at least two indicator yarn fibers, and second tufts, comprising at least two face yarn fibers, wherein the first tufts and the second tufts alternate and wherein the first and second tufts are integrated into the carrier in the form of a fourth row. It goes without saying that it is also conceivable that the arrangement of the first and second tufts could also be first tuft - first tuft - second tuft - first tuft - first tuft - second tuft or second tuft - second tuft - first tuft - second tuft - second tuft - first tuft. Further, it may be advantageous that the rows are arranged such that the first tufts are arranged beside the second tufts.

For all three alternatives it is further feasible that the rows are straight lines and/or zig-zag lines.

It is further feasible that first rows, second rows, third rows and fourth rows may be alternating in this order or in any other.

In a further aspect, the invention relates to a method for maintaining a tufted artificial turf as described above. The method comprises the steps of
i. inspecting the tufted artificial turf to identify a region, where the optically visible contrast of the indicator yarn fibers relative to the infill is optically detectable and
ii. redistributing and/or providing additional infill in order to cover the indicator yarn fibers such that the contrast disappears.

Before step i. the method may further comprise the step of filling up the tufted artificial turf (100) with an infill to the desired installation height, which is, as explained above dependent on the sport which is played on the artificial turf.

In one embodiment of the method, the step of inspecting is performed by visual inspection.

In another embodiment of the method, the step of inspecting is performed by means with an optical sensor. Hereby, it may be feasible that the means with an optical sensor are arranged within a maintenance robot.

In another aspect the invention provides for an artificial turf maintenance robot system. The artificial turf maintenance robot system may be used for the maintenance of a tufted artificial turf filled with an artificial turf infill. The artificial turf maintenance robot system comprises a self-driving robot configured for distributing artificial turf infill within the tufted artificial turf. As used herein the term 'distributing' may encompass moving artificial turf infill from one portion of the tufted artificial turf and/or it may include adding additional or more artificial turf infill to the tufted artificial turf. The artificial turf maintenance robot system further comprises a processor for controlling the artificial turf maintenance robot system. As used herein a processor may encompass one or more processors and may also encompass a distributed computing system. For example there may be one or more processors located on the self-driving robot and there may be also additionally processors at a different location which is used to control the self-driving robot.

The artificial turf maintenance robot system further comprises a memory containing machine-executable instructions for execution by the processor. Execution of the machine-executable instructions causes the processor to receive optical data descriptive of a location of indicator yarn fibers. Execution of the machine-executable instructions further cause the processor to control the self-driving robot using the optical data to distribute artificial turf infill to optically obscure the indicator yarn fibers. The indicator yarn fibers are fibers which can be detected using an optical detection system such as a camera. The optical data indicates the locations where indicator yarn fibers are visible. The optical data is then used to generate for example control instructions which are used to control the self-driving robot to optically obscure the indicator yarn fibers. The obscuring of the indicator yarn fibers may be performed by distributing the artificial turf infill to cover them. This could involve either moving artificial turf infill and distributing it more evenly to cover exposed indicator yarn fibers or it may also include the dispensing or adding of artificial turf infill.

The optical data can be used to automatically differentiate between the indicator yarn fibers and the face yarn fibers. Color data can be used to determine a difference in color space. This can be achieved by measuring the difference in color space and determining If the difference between two colors is above a predetermined threshold. For example, to achieve an indicator function of the indicator yarn fibers, the color of one or several of the texturized thatch yarns may have a significant enough color distance to the infill on one side, which may be used to indicate a lack of coverage of the indicator yarn fibers by the infill.

In a specific example, the color distance can be e.g. expressed in terms of the Cie-L*a*b* color space. The color in the Cie Lab color space is expressed in 3 numerical values: L for the lightness, a* for the green-red color components and b* for the blue-yellow color components (color axis) of the respective. An example of the color distance is e.g. the distance between a face yarn in a standard turf olive and indicator yarn in an intensive blue tone. The measured color difference is delta L = + 8,84 , delta a = - 6,98, delta b = + 50,33, delta E = + 51,57. A visible difference is achieved when delta E exceeds a minimum value of 0.5. With lesser indicator fiber (e.g. only 1 fiber per bundle) the color distance should typically exceed a delta E of 1.0. This technique can also be applied to other color spaces such as RGB density.

In another aspect, the invention provides for a turf maintenance robot configured for brushing an artificial turf surface. The turf maintenance robot is a self-driving robot. The turf maintenance robot comprises a processor for controlling the turf maintenance robot. The turf maintenance robot further comprises a memory for storing turf grain data descriptive the grain of the artificial turf fibers. The memory further contains machine executable instructions for execution by the processor. Execution of the machine executable instructions causes the processor to control the turf maintenance robot to brush the artificial turf fibers dependent upon the turf grain data.

In another aspect, the invention provides for a turf maintenance robot configured for brushing an artificial turf surface. The turf maintenance robot is a self driving robot. The turf maintenance robot comprises two drive wheels configured for propelling the self propelled robot. The at least two drive wheels have a common rotational axis. The turf maintenance robot further comprises a stationary brush mounted at least partially behind the rotational axis. The stationary brush is mounted between the two drive wheels. The embodiment may be advantageous because the use of the stationary brush simplifies the construction of the turf maintenance robot in comparison to a rotational brush.

In another embodiment, the turf maintenance robot further comprises a grass cutting element. The turf maintenance robot may have a grass cutting element such as a rotating blade or other cutting element that is configured such that it is able to cut grass to a predetermined height or an adjustable height. Such an embodiment would be beneficial if the turf is a so called hybrid turf that incorporates elements of both a natural turf and an artificial turf. In some examples the grass cutting elment can be selectively turned off or deactivated. For example, the turf maintenance robot could be used to maintain an artificial turf surface with the grass cutting element deactivated. When the turf maintenance robot is over a natural or hybrid turf surface the grass cutting element could be turned on or activated.

In another embodiment, the turf maintenance robot further comprises a grass watering component. The turf maintenance robot could incorporate a reservoir for holding water or be connected to a hose that supplies water to the watering component. The watering component could for example be a spray nozzle that is able to water a natural or hybrid turf surface. Like the grass cutting element the watering component could be configured to selectively turned on or off.

In another embodiment, the turf maintenance robot further comprises a magnetic metal removal component. The turf maintenance robot could incorporate a permanent or electro magnet that is suspended over the artificial turf surface. As the turf maintenance robot moves over the turf surface the magnetic metal removal component could attract ferromagnetic materials that may be contaminating the turf.

In another embodiment, the turf maintenance robot comprises a positioning system for providing a current location to the processor. The processor is configured for self driving the turf maintenance robot at least partially using the current location. The processor may for example be programmed to calculate a trajectory or path for the turf maintenance robot to follow. The current location may provide a means for the turf maintenance robot to follow this path or trajectory.

In another aspect, the invention provides for a turf maintenance robot configured for brushing an artificial turf surface. The turf maintenance robot is a self driving robot, The turf maintenance robot comprises a wireless network interface configured for connecting to a cloud server. The wireless network interface could for example be, but is not limited to: a cellular IP connection, a WIFI connection, a radio connection, or a Bluetooth connection.

The turf maintenance robot further comprises a processor for controlling the turf maintenance robot. The turf maintenance robot further comprises a memory containing machine executable instructions for execution by the processor. Execution of the machine executable instructions causes the processor to connect to the cloud server. Execution of the machine executable instructions further causes the processor to receive turf maintenance data from the cloud server. Execution of the machine executable instructions further causes the processor to control the turf maintenance robot to brush the artificial turf fibers at least partially using the turf maintenance data.

The turf maintenance data may take different forms in different examples. In some examples the turf maintenance data comprises turf grain data. In other examples the turf maintenance data comprises instructions for controlling the operation of the turf maintenance robot.

In another aspect the invention provides for a method of artificial turf maintenance using a turf maintenance robot configured for performing maintenance on the artificial turf and a drone configured for flying above the artificial turf. The drone comprises a sensor configured for acquiring artificial turf data descriptive of the artificial turf. The method comprises controlling the drone to fly over the artificial turf and acquire the artificial turf data. The method further comprises controlling the turf maintenance robot to perform maintenance on the artificial turf using the sensor data.

In another embodiment the artificial turf data comprises image data. The method further comprises identifying at least one maintenance zone within the artificial turf by inputting the image data into an image classification module. The method further comprises controlling the turf maintenance robot to perform maintenance on the at least one maintenance zone.

In another aspect the invention provides for a computer program comprising machine-executable instructions for execution by a processor controlling a turf maintenance system. The turf maintenance system comprises a turf maintenance robot configured for performing maintenance on an artificial turf. The turf maintenance system further comprises a drone configured for flying above the artificial turf. The drone comprises a sensor configured for acquiring the artificial turf data descriptive of the artificial turf. Execution of the machine-executable instructions further causes the processor to control the drone to fly over the artificial turf and acquire the artificial turf data. Execution of the machine-executable instructions further causes the processor to control the turf maintenance robot to perform maintenance on the artificial turf using the sensor data.

In another embodiment the artificial turf data comprises image data. Execution of the machine-executable instructions further cause the processor to identify at least one maintenance zone within the artificial turf by inputting the image data into an image classification module. Execution of the machine-executable instructions further causes the processor to control the turf maintenance robot to perform maintenance on the at least one maintenance zone.

It should be noted that the memory in the processor could be located in different positions. In one example the memory in the processor are located within the turf maintenance robot. In another example the memory and the processor are located within the drone. In yet another example the memory and the processor are located in a remote computing device such as a computer or tablet or mobile telephone. In yet another example, the memory and the processor have components which are distributed between the turf maintenance robot, the drone, and/or an external computing device.

It is understood that one or more of the aforementioned embodiments of the invention may be combined as long as the combined embodiments are not mutually exclusive.

As will be appreciated by one skilled in the art, aspects of the present invention may be embodied as an apparatus, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon.

Any combination of one or more computer readable medium(s) may be utilized. The computer readable medium may be a computer readable signal medium or a computer readable storage medium. A 'computer-readable storage medium' as used herein encompasses any tangible storage medium which may store instructions which are executable by a processor of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the processor of the computing device. Examples of computer-readable storage media include, but are not limited to: a floppy disk, a magnetic hard disk drive, a solid state hard disk, flash memory, a USB thumb drive, Random Access Memory (RAM), Read Only Memory (ROM), an optical disk, a magnetooptical disk, and the register file of the processor. Examples of optical disks include Compact Disks (CD) and Digital Versatile Disks (DVD), for example CD-ROM, CD-RW, CD-R, DVD-ROM, DVD-RW, or DVD-R disks. The term computer readable-storage medium also refers to various types of recording media capable of being accessed by the computer device via a network or communication link. For example, a data may be retrieved over a modem, over the internet, or over a local area network. Computer executable code embodied on a computer readable medium may be transmitted using any appropriate medium, including but not limited to wireless, wire line, optical fiber cable, RF, etc., or any suitable combination of the foregoing.

A computer readable signal medium may include a propagated data signal with computer executable code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

'Computer memory' or 'memory' is an example of a computer-readable storage medium. Computer memory is any memory which is directly accessible to a processor. 'Computer storage' or 'storage' is a further example of a computer-readable storage medium. Computer storage is any non-volatile computer-readable storage medium. In some embodiments computer storage may also be computer memory or vice versa.

A 'processor' as used herein encompasses an electronic component which is able to execute a program or machine executable instruction or computer executable code. References to the computing device comprising "a processor" should be interpreted as possibly containing more than one processor or processing core. The processor may for instance be a multi-core processor. A processor may also refer to a collection of processors within a single computer system or distributed amongst multiple computer systems. The term computing device should also be interpreted to possibly refer to a collection or network of computing devices each comprising a processor or processors. The computer executable code may be executed by multiple processors that may be within the same computing device or which may even be distributed across multiple computing devices.

Computer executable code may comprise machine executable instructions or a program which causes a processor to perform an aspect of the present invention. Computer executable code for carrying out operations for aspects of the present invention may be written in any combination of one or more programming languages, including an object-oriented programming language such as Java, Smalltalk, C++ or the like and conventional procedural programming languages, such as the "C" programming language or similar programming languages and compiled into machine executable instructions. In some instances, the computer executable code may be in the form of a high-level language or in a pre-compiled form and be used in conjunction with an interpreter which generates the machine executable instructions on the fly.

The computer executable code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described with reference to flowchart illustrations and/or block diagrams of methods, apparatus (systems) and computer program products according to embodiments of the invention. It is understood that each block or a portion of the blocks of the flowchart, illustrations, and/or block diagrams, can be implemented by computer program instructions in form of computer executable code when applicable. It is further under stood that, when not mutually exclusive, combinations of blocks in different flowcharts, illustrations, and/or block diagrams may be combined. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

A 'user interface' as used herein is an interface which allows a user or operator to interact with a computer or computer system. A 'user interface' may also be referred to as a 'human interface device.' A user interface may provide information or data to the operator and/or receive information or data from the operator. A user interface may enable input from an operator to be received by the computer and may provide output to the user from the computer. In other words, the user interface may allow an operator to control or manipulate a computer and the interface may allow the computer indicate the effects of the operator's control or manipulation. The display of data or information on a display or a graphical user interface is an example of providing information to an operator. The receiving of data through a keyboard, mouse, trackball, touchpad, pointing stick, graphics tablet, joystick, gamepad, webcam, headset, pedals, wired glove, remote control, and accelerometer are all examples of user interface components which enable the receiving of information or data from an operator.

A 'hardware interface' as used herein encompasses an interface which enables the processor of a computer system to interact with and/or control an external computing device and/or apparatus. A hardware interface may allow a processor to send control signals or instructions to an external computing device and/or apparatus. A hardware interface may also enable a processor to exchange data with an external computing device and/or apparatus. Examples of a hardware interface include, but are not limited to: a universal serial bus, IEEE 1394 port, parallel port, IEEE 1284 port, serial port, RS-232 port, IEEE-488 port, Bluetooth connection, Wireless local area network connection, TCP/IP connection, Ethernet connection, control voltage interface, MIDI interface, analog input interface, and digital input interface.

A 'display' or 'display device' as used herein encompasses an output device or a user interface adapted for displaying images or data. A display may output visual, audio, and or tactile data. Examples of a display include, but are not limited to: a computer monitor, a television screen, a touch screen, tactile electronic display, Braille screen, Cathode ray tube (CRT), Storage tube, Bi-stable display, Electronic paper, Vector display, Flat panel display, Vacuum fluorescent display (VF), Light-emitting diode (LED) displays, Electroluminescent display (ELD), Plasma display panels (PDP), Liquid crystal display (LCD), Organic light-emitting diode displays (OLED), a projector, and Head-mounted display.

### Brief description of the drawings

In the following embodiments of the invention are explained in greater detail, by way of example only, making reference to the drawings in which:
Fig. 1 illustrates an example of a turf maintenance system;
Fig. 2 shows a flow chart which illustrates an example of a method of operating the turf maintenance system of Fig. 1;
Fig. 3 shows a side view of a turf maintenance robot;
Fig. 4 shows a top view of the turf maintenance robot of Fig. 3.;
Fig. 5 illustrates an example of a drone;
Fig. 6 illustrates an example of a drone surveying an artificial turf; and
Fig. 7 illustrates the drone of Fig. 6 directing a turf maintenance robot to perform maintenance on the artificial turf.

### Detailed Description

Like numbered elements in these figures are either equivalent elements or perform the same function. Elements which have been discussed previously will not necessarily be discussed in later figures if the function is equivalent.

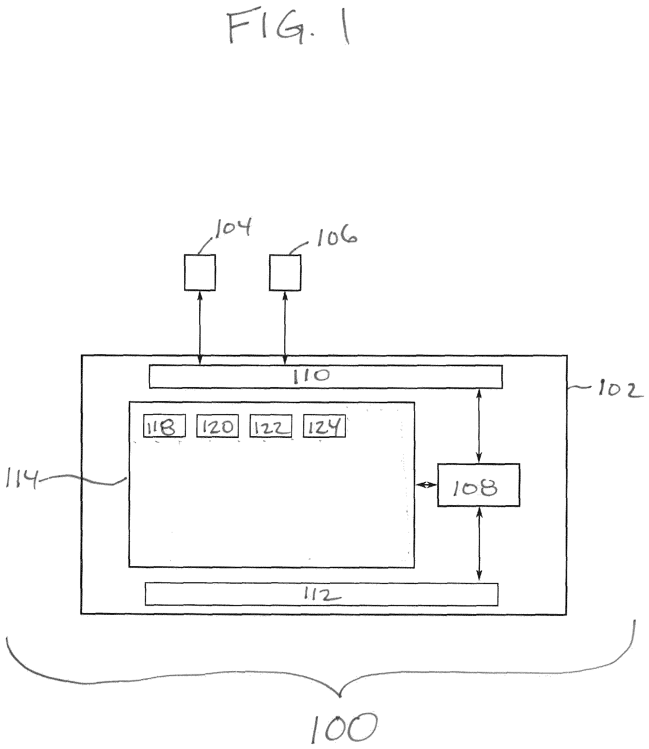

Fig. 1 illustrates an example of a turf maintenance system 100. In this example the turf maintenance system comprises a computer 102, a turf maintenance robot 104, and a drone 106. The computer system 102 comprises a processor 108 that is in communication with a hardware interface 110, a user interface 112, and a memory 114. It should be noted that the components and software elements present in the computer 102 could also be distributed between the turf maintenance robot 104 and the drone 106. The hardware interface 110 enables communication between the processor 108 and the turf maintenance robot 104 and the drone 106. It may for example be a radio communication system or a Wi-Fi system. The user interface 112 is optional and may provide an operator to control the operation and function of the turf maintenance system 100.

The memory 114 is shown as containing machine-executable instructions 118 which provide instructions for the processor 108 which enable it to control the turf maintenance system 100. The memory 114 is further shown as containing artificial turf data 120 that has been acquired by the drone 106. The memory 114 is further shown as containing an optional image classification module 122. The artificial turf data 120 may for example comprise image data. The image classification module 122 may take this image data as input. The memory 114 is further shown as containing the optional location of one or more maintenance zones 124. The location of the maintenance zone 124 is the identification of areas that require maintenance by the turf maintenance robot 104. The artificial turf data 120 or the location of the maintenance zones 124 may be used for controlling the turf maintenance robot 104 to perform maintenance on an artificial turf.

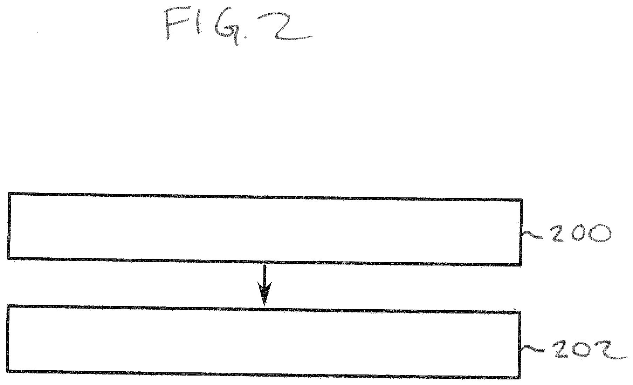

Fig. 2 shows a flowchart which illustrates a method of operating the turf maintenance system 100. First in step 200 the processor 108 controls the drone 106 to fly over the artificial turf and acquire the artificial turf data 120. Next in step 202 the processor 108 controls the turf maintenance robot 104 to perform maintenance on the artificial turf using the artificial turf data 120. In some examples the controlling of the artificial turf maintenance robot with the artificial turf data may comprise inputting image data that is part of the artificial turf data into the image classification module 122 and receiving the location of the maintenance zone 124 as output.

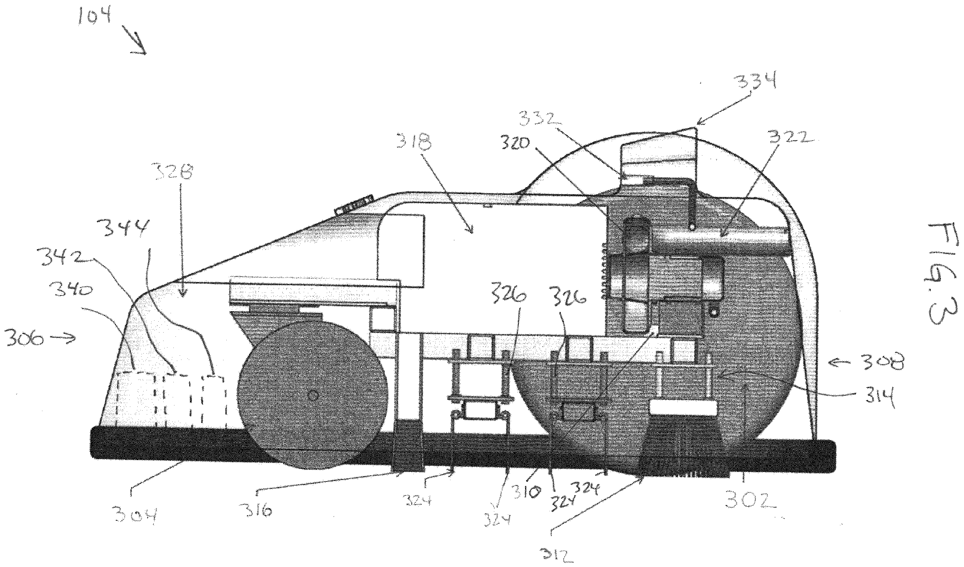

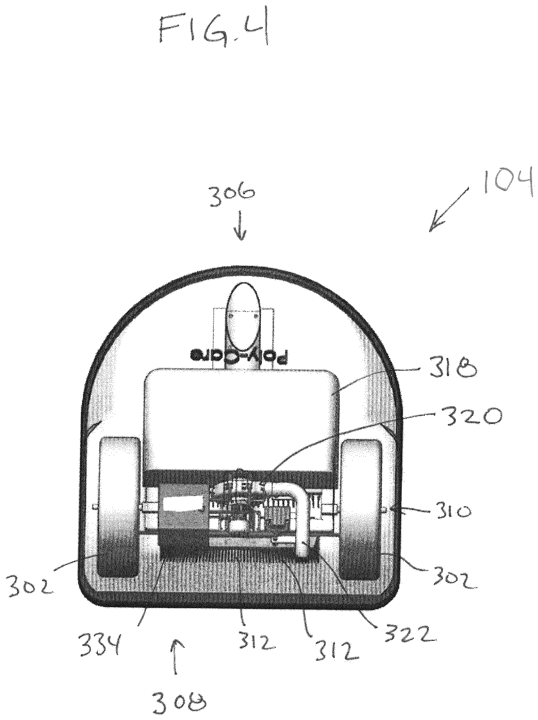

Figs. 3 and 4 illustrate an example of a turf maintenance robot 104. Fig. 3 shows a side view and Fig. 4 shows a top view. Both are views of the same robot. The robot 104 is shown as having two drive wheels 302. The drive wheels 302 in this example also comprise a battery or batteries which are integrated into the drive wheels 302. There is also a single front steering wheel 304 that is used to control the direction of travel of the turf maintenance robot 104. The turf maintenance robot has a front 306 and a back or rear 308. The robot 104 is designed such that it travels in the direction of going with the front 306 forward. The drive wheels 302 rotate about a common rotational axis 310. Behind the common rotational axis 310 is located a brush 312. The brush 312 is connected to the turf maintenance robot 104 by a brush height adjustment mechanism 314.

The brush 312 is mostly located closer to the back or rear 308 than the common rotational axis 310. Between the steering wheel 304 and the two drive wheels 302 is located an inlet nozzle 316. The inlet nozzle 316 is an inlet for a vacuum system. The vacuum system is formed by a garbage container 318, a blower 320, and an exhaust 322. The inlet nozzle 316 is used to remove garbage or debris from the artificial turf before it is prepared or brushed using the brush 312. Between the nozzle 316 and the brush 312 are located a number of turf infill ploughing structures 324. The turf infill ploughing structures may also be referred to as rakes. The turf infill ploughing structures 324 are used to break up and loosen the artificial turf infill before it is brushed. The turf infill ploughing structures 324 are connected to the turf maintenance robot 104 by a number of ploughing structure height adjustment mechanisms 326. As the robot 104 travels forward the artificial turf is first vacuumed using the inlet nozzle 316.

The artificial turf infill is then roughly dispersed using a turf infill ploughing structure 324. This loosens and may cause the artificial turf infill to be less densely packed. Then finally the artificial turf infill is smoothed and put into position using the brush 312. The brush 312 also may have the effect of making the artificial turf fibers 106 stand up more straight. The entire robot 104 is shown as being covered with a plastic chassis 328. The turf maintenance robot 104 is also shown as comprising a charging socket 330 and a GPS antenna 332. The GPS antenna 332 may also be replaced by other antennas used for receiving different sorts of radio signals for either data exchange and/or positioning. A controller 334 is additionally visible in Fig. 4.

The example illustrated in Figs. 3 and 4 is only one example. The example in Figs. 3 and 4 uses a fixed or stationary brush 312. Other examples may use a rotating brush.

The robot illustrated in Figs. 3 and 4 may have several advantages. The use of the stationary brush and the batteries may provide for a robot that may move at approximately 4 km per hour and would take about five hours for it to maintain a typical artificial turf in the form of a football or soccer field.

The robot 104 has dimensions of typically about 100 cm wide, 115 cm long and about 54 cm high and would weigh about 100 kg.

The robot in Fig. 3 is shown as optionally comprising a magnetic metal removal component 340. The robot may for example may a permanent magnet or electro magnet that is mounted such that it is able to attract metal fragments that are present in the turf. This may have the benefit of being able to remove ferromagnetic fragments from the turf. In the case of an electromagnet, the electromagnet could be turned off when it is desired to remove and collected metal fragments. If a permanent magnet is used, the permanent magnet could be removable to facilitate removal of any collected metal fragments.

The robot in Fig. 3 is shown as optionally comprising a grass cutting element 342. A rotating blade or other cutting surface may be incorporated into the robot 104 that is able to cut grass plants to a predetermined height or an adjustable height. This may be useful for cutting grass plans (mowing) that are part of a hybrid turf surface or a natural turf surface. The grass cutting element may in some examples also be able to be selectively turned on and off. This may enable, for example, turning the grass cutting element off when the robot is being used on an artificial turf surface. If the robot is then used over a natural turf or a hybrid turf the grass cutting element can be turned on.

The robot in Fig. 3 is shown as optionally comprising a grass watering component 344. The grass watering component may for example incorporate a nozzle that is connected to a reservoir or to a hose. This may enable to grass watering element to spray water onto the surface of the turf. This may be useful for watering natural grass plants that are incorporated into artificial turfs or natural turfs. It may also be useful for wetting the surface of an artificial turf before it is used. The spraying of water may for example be used to help prevent the artificial turf from overheating.

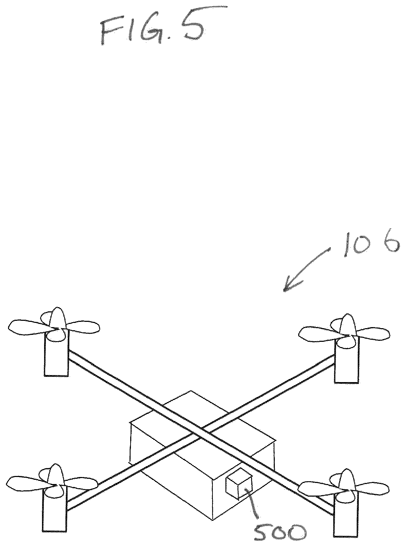

Fig. 5 illustrates an example of a drone 106. The drone comprises a sensor 500. The sensor 500 is configured for acquiring the artificial turf data as the drone 106 overflies the artificial turf.

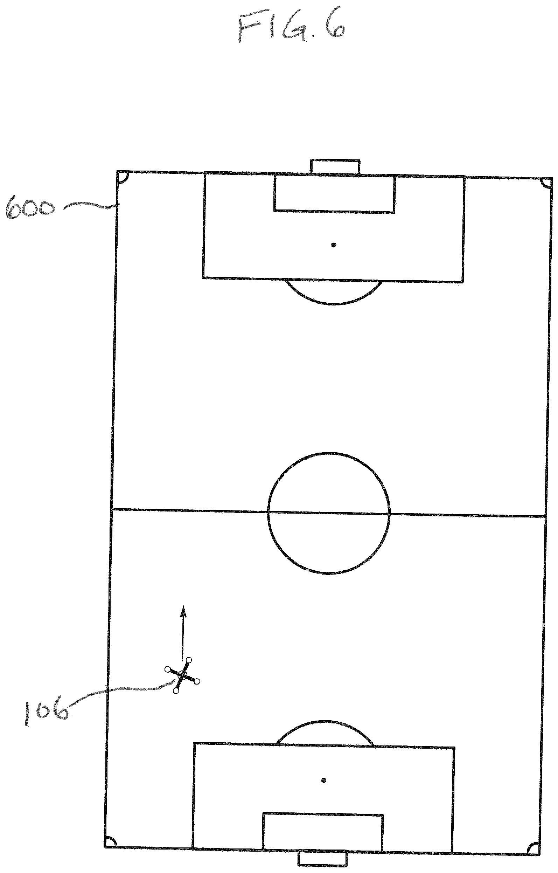

Fig. 6 shows an artificial turf 600. In this example the artificial turf is a soccer or football field. The artificial turf 600 could be fields for other sports also. The drone 106 is shown as flying over the artificial turf 600 and is acquiring the artificial turf data 120.

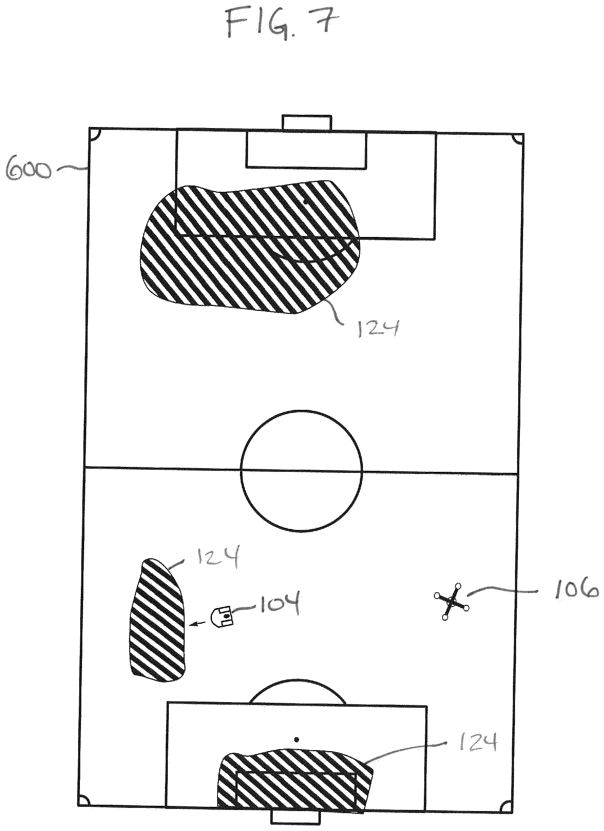

Fig. 7 shows an additional view of the artificial turf 600 after the drone 106 has flown over and acquired the artificial turf data 120. In this example the artificial turf data 120 comprised image data and the image data was input into the image classification module 122. The image classification module 122 then output a number of maintenance zones 124. The location of these maintenance zones 124 is shown as being superimposed on the artificial turf 600. The location of these turf maintenance zones 124 is then used to control the turf maintenance robot 104 to perform maintenance in the turf maintenance zones 124. In this example there are only several areas and the turf maintenance robot 104 does not need to perform maintenance on the entire artificial turf 600.

The drone 106 is shown as hovering and monitoring the turf maintenance robot 104. The drone 106 could for example be used to control directly the turf maintenance robot 104 and ensure it goes to the maintenance zones 124. This may for example be useful in an indoor arena where it is not possible to receive a GPS signal. The use of the drone 106 in this fashion would eliminate the need to provide an additional positioning system for the turf maintenance robot 104. In other examples there may be an external positioning system available to the turf maintenance robot 104 such as a GPS system or other location system. In this case the drone 106 may simply provide the location of the turf maintenance zones 124 and then the turf maintenance robot 104 performs maintenance on these zones independent of the drone 106.

### List of reference numerals

- 100: turf maintenance system
- 102: computer
- 104: turf maintenance robot
- 106: drone
- 108: processor
- 110: hardware interface
- 112: user interface
- 114: memory
- 118: machine executable instructions
- 120: artificial turf data
- 122: image classification module
- 124: location of maintenance zone
- 200: control the drone to fly over the artificial turf and acquire the artificial turf data
- 202: control the turf maintenance robot to perform maintenance on the artificial turf using the artificial turf data
- 302: drive wheel
- 304: steering wheel
- 306: front
- 308: back or rear
- 310: common rotational axis
- 312: brush
- 314: brush height adjustment mechanism
- 316: inlet nozzle
- 318: garbage container
- 320: blower
- 322: exhaust
- 324: turf infill plowing structure
- 326: plowing structure height adjustment mechanism
- 328: plastic chassis
- 330: charging socket
- 332: GPS antenna
- 334: controller
- 340: magnetic metal removal component
- 342: grass cutting element
- 344: grass watering component
- 500: sensor
- 600: artificial turf

## Claims

1. A turf maintenance system (100) comprising:
- a turf maintenance robot (104) configured for performing maintenance on an artificial turf (600);
- a drone (106) configured for flying above the artificial turf, wherein the drone comprises a sensor (500) configured for acquiring artificial turf data (120) descriptive of the artificial turf;
- a memory (114) for storing machine executable instructions;
- a processor (108) configured for controlling the turf maintenance system, wherein execution of the machine executable instructions causes the processor to:
- control (200) the drone to fly over the artificial turf and acquire the artificial turf data; and
- control (202) the turf maintenance robot to perform maintenance on the artificial turf using the artificial turf data.

2. The turf maintenance system of claim 1, wherein the artificial turf data comprises image data; wherein execution of the machine executable instructions further cause the processor to:
- identify at least one maintenance zone (700) within the artificial turf by inputting the image data into an image classification module (122); and
- control the turf maintenance robot to perform maintenance on the at least one maintenance zone.

3. The turf maintenance system of claim 2, wherein execution of the machine executable instructions cause the processor to limit maintenance to the at least one maintenance zone.

4. The turf maintenance system of claim 2 or 3, wherein the sensor comprises any one of the following: a camera, a stereo camera, and combinations thereof.

5. The turf maintenance system of claim 2, 3, or 4, wherein the image classification module is configured for identifying the at least one maintenance zone using any one of the following:
- detecting a color difference in the turf images;
- detecting a spatially dependent reflectivity of the artificial turf;
- detecting a pile direction pattern in the turf images; and
- combinations thereof.

6. The turf maintenance system of any one of claims 2 through 4, wherein the image classification module is at least partially implemented as a neural network.

7. The turf maintenance system of any one of claims 1 through 6, wherein performing maintenance on the artificial turf comprises any one of the following:
- cleaning a surface of the artificial turf;
- cross-brushing the artificial turf;
- redistributing artificial turf infill; and
- combinations thereof.

8. The turf maintenance system of any one of claim 1 through 7, wherein the turf maintenance robot is configured for brushing the artificial turf surface, wherein the turf maintenance robot is a self-driving robot, wherein performing maintenance on the artificial turf comprises:
- calculating a brushing path using the artificial turf data; and
- controlling the turf maintenance robot to follow the brushing path.

9. The turf maintenance system of claim 8, wherein the turf maintenance robot further comprises at least two drive wheels (302) configured for propelling the self-propelled robot, wherein the at least two drive wheels have a common rotational axis, wherein a brush (312) is mounted at least partially behind the rotational axis, and wherein the brush is mounted between the two drive wheels.

10. The turf maintenance system of claim 9, wherein the turf maintenance robot comprises a vacuum system configured for vacuuming the artificial turf surface, wherein the method further comprises vacuuming the artificial turf surface during the brushing of the artificial turf surface.

11. The turf maintenance system of claim 10, wherein the vacuum system comprises an inlet nozzle (316) is configured for contacting the artificial turf surface in front of the brush, wherein the turf maintenance robot further comprises turf infill plowing structures (324) in front of the brush.

12. A method of artificial turf maintenance using a turf maintenance robot (104) configured for performing maintenance on an artificial turf (600) and a drone (106) configured for flying above the artificial turf, wherein the drone comprises a sensor (500) configured for acquiring artificial turf data (120) descriptive of the artificial turf, wherein the method comprises:
- controlling (200) the drone to fly over the artificial turf and acquire the artificial turf data; and
- controlling (202) the turf maintenance robot to perform maintenance on the artificial turf using the sensor data.

13. The method of claim 12, wherein the artificial turf data comprises image data; wherein the method comprises:
- identifying at least one maintenance zone (700) within the artificial turf by inputting the image data into an image classification module; and
- controlling the turf maintenance robot to perform maintenance on the at least one maintenance zone.

14. A computer program comprising machine executable instructions (118) for execution by a processor (108) controlling a turf maintenance system, wherein the turf maintenance system comprises a turf maintenance robot (104) configured for performing maintenance on an artificial turf (600), wherein the turf maintenance system further comprises a drone (106) configured for flying above the artificial turf, wherein the drone comprises a sensor (500) configured for acquiring artificial turf data descriptive of the artificial turf, wherein execution of the machine executable instructions cause the processor to:
- control (200) the drone to fly over the artificial turf and acquire the artificial turf data; and
- control (202) the turf maintenance robot to perform maintenance on the artificial turf using the sensor data.

15. The computer program of claim 14, wherein the artificial turf data comprises image data; wherein execution of the machine executable instructions further cause the processor to:
- identify at least one maintenance zone (700) within the artificial turf by inputting the image data into an image classification module; and
- control the turf maintenance robot to perform maintenance on the at least one maintenance zone.
